# EUROPÄISCHE PATENTANMELDUNG

(11) **EP 3 034 464 A1**
(43) Veröffentlichungstag der Anmeldung: **22.06.2016**
(21) Anmeldenummer: 15000896.9
(22) Anmeldetag: 26.03.2015
(51) Int. Cl.: C01B 3/38

(54) **VERFAHREN UND VORRICHTUNG ZUR ERZEUGUNG VON SYNTHESEGAS**

(30) Priorität: 15.12.2014 DE 102014018375
(71) Anmelder: Linde Aktiengesellschaft, 80331 München (DE)
(72) Erfinder: Hanno, Tautz, 82538 Geretsried (DE)
(74) Vertreter: Fischer, Werner

(57) **Zusammenfassung**

Die Erfindung betrifft ein Verfahren sowie eine Vorrichtung zur Erzeugung von Synthesegas (4), wobei Kohlenwasserstoffe enthaltendes Brenngas (2) sowie ein Oxidationsmittel (1) in den Reaktionsraum (R) eines Reaktors (Z) eingeleitet werden, um durch Partielle Oxidation der im Brenngas (2) enthaltenen Kohlenwasserstoffe Wasserstoff und Kohlenmonoxid zu erzeugen und Energie freizusetzen, die bei einer nachfolgenden katalytisch unterstützten Reformierung verbraucht wird. Kennzeichnend hierbei ist, dass die Reformierung durch einen Katalysator unterstützt wird, der auf einer Trägerstruktur in Form einer strukturierten Packung und/oder eines Monolithen (M) angebracht ist.

## Beschreibung

Die Erfindung betrifft ein Verfahren zur Erzeugung von Synthesegas, wobei Kohlenwasserstoffe enthaltendes Brenngas sowie ein Oxidationsmittel in den Reaktionsraum eines Reaktors eingeleitet werden, um durch Partielle Oxidation der im Brenngas enthaltenen Kohlenwasserstoffe Wasserstoff und Kohlenmonoxid zu erzeugen und Energie freizusetzen, die bei einer nachfolgenden katalytisch unterstützten Reformierung verbraucht wird.

Weiterhin betrifft die Erfindung eine Vorrichtung zur Durchführung des erfindungsgemäßen Verfahrens.

Die Produktion von Synthesegas ist ein wichtiger Schritt bei der Herstellung einer Vielzahl von Stoffen wie Ammoniak oder Methanol, aber auch bei der Erzeugung von synthetischen Kraftstoffen aus Erdgas (GTL). Das bevorzugte Verfahren, mit dem das Synthesegas produziert wird, hängt vom Zielprodukt und der erforderlichen Anlagenkapazität ab. Die Produktion von Wasserstoff basiert meist auf dem Prinzip der Dampfreformierung im von außen beheizten Rohrreformer. Für die Produktion von Synthesegas für die Methanolherstellung in Großanlagen hat sich der katalytische Autothermreformierung (ATR) durchgesetzt. Bei der Produktion von Synthesegas in GTL -Anlagen, die nach dem Fischer-Tropsch-Verfahren arbeiten, werden sowohl Autothermreformer als auch eine Kombination von nichtkatalytischer Partieller Oxidation (POX) und Dampfreformierung im Rohrreformer eingesetzt. Die aus heißen POX- oder ATR-Reaktoren abströmenden heißen Synthesegase können zur konvektiven Beheizung von Dampfreformerrohren (Gas-Heated-Reformer (GHR)) verwendet werden. Das GHR-Produktgas wird meist in einem ATR bzw. POX-Reaktor nachbehandelt. Darüber hinaus gibt es noch Kombinationen der verschiedenen Anlagentypen.

Bei der Dampfreformierung im Rohrreformer wird ein vorgewärmter kohlenwasserstoffhaltiger Einsatz mit Wasserdampf gemischt und durch mit Katalysatormaterial gefüllte Reformerrohre geleitet. Der Katalysator beschleunigt die Dampfreformierung der Kohlenwasserstoffe und unterstützt gleichzeitig die sog. Wassergas-Shift-Reaktion. Handelt es sich beispielsweise bei dem kohlenwasserstoffhaltigen Einsatz um Methan, läuft die endotherme Reformierungsreaktionen nach den Gleichungen

CH₄ + H₂O ⇔ CO + 3H₂

CH₄ + CO₂ ⇔ 2CO + 2H₂

und die exotherme Wassergas-Shift-Reaktion nach der Gleichung

CO + H₂O ⇔ CO₂ + H₂

ab. Da die Reformierungsreaktionen mehr Energie verbrauchen, als die Wassergas-Shift-Reaktion liefert, müssen die Reformerrohre von außen über Brenner oder heiße Prozessgasen beheizt werden, um eine ausreichende Reaktionstemperatur aufrecht zu erhalten. Durch die Festigkeitseigenschaften des Rohrmaterials (nickelhaltige Edelstähle) bedingt, werden die Reaktionstemperaturen auf 800-900°C und die Reaktionsdrücke auf 20-40 bar im beschränkt. Bei diesen Betriebsparametern erfolgt die Umsetzung der Kohlenwasserstoffe im Einsatz nur unvollständig. Um einen möglichst hohen Umsetzungsgrad zu erreichen und gleichzeitig die Rußbildung in den Reformerrohren zu minimieren, wird mit einem Dampfüberschuss gearbeitet, sodass das Verhältnis von Wasserdampf zu Kohlenstoff (D/C-Verhältnis) je nach Temperatur und gewünschter Synthesegaszusammensetzung zwischen 2 und 4 liegt.

Bei der Partiellen Oxidation wird Synthesegas dadurch erzeugt, dass ein vorgewärmter kohlenwasserstoffhaltiger Brennstoffeinsatz bei Temperaturen zwischen 1300 und 1500°C und Drücken bis zu 150 bar im Reaktionsraum eines POX-Reaktors mit einem Oxidationsmittel umgesetzt wird. Die hohen Reaktordrücke und Betriebstemperaturen werden dadurch ermöglicht, dass der Reaktionsraum mit einer Wärmeisolierung gegen einen außen liegenden druckfesten Stahlmantel gekapselt ist. Da nur geringe Mengen Wasser als Spüldampf mit den Einsatzstoffen zugegeben werden, ist das D/C-Verhältnis i.Allg. kleiner als 0,1. Die für die Reformierung erforderliche Wärme muss durch Oxidationsreaktionen intern erzeugt werden. Hierzu wird Sauerstoff in einer Menge zugegeben, die für eine vollständige Umsetzung der Kohlenwasserstoffe nicht ausreichend ist. Die Reformierungsreaktion läuft in der Gasphase ohne Katalysator ab. Wird beispielsweise Methan als Brennstoffeinsatz verwendet, erfolgt die exotherme Umsetzung nach den folgenden Gleichungen:

CH₄ + 2 O₂ ⇒ CO₂ + 2 H₂O

2CH₄ + O₂ ⇒ 2CO + 4H₂

Bei der Autothermreformierung wird einem ATR-Reaktor ein vorgewärmter Kohlenwasserstoffe enthaltender Einsatz, ein ebenfalls vorgewärmtes Oxidationsmittel und sowie Wasserdampf zugeführt. Das typische D/C-Verhältnis liegt bei 0,6. Charakteristisch für die katalytische Verfahren ist seine hohe Flexibilität, die eine Wahl der Reaktionsparameter (kohlenwasserstoffhaltiger Einsatz, D/C-Verhältnis, Temperatur, Druck) in einem weiten Bereich ermöglicht. Typischerweise liegt die Arbeitstemperatur eines ATR-Reaktors zwischen 900 und 1500°C und der Arbeitsdruck zwischen 20 und 40bar. Als kohlenwasserstoffhaltige Einsätze sind Erdgas, LPG und Naphta geeignet. Darüber hinaus werden ATR-Reaktoren häufig mit Gasen beschickt, die bereits einen Dampfreformer passiert haben. In diesen Fällen fungiert der ATR-Reaktor als sog. Sekundärreformer. Die maximale Arbeitstemperatur wird durch die Temperaturstabilität des Katalysators und/oder der feuerfesten Auskleidung des Reaktors begrenzt.

Aus verfahrenstechnischer Sicht handelt es sich bei der Autothermreformierung um eine Kombination aus Partieller Oxidation mit erhöhter Dampfzufuhr und Dampfreformierung im Katalysatorbett. Die Energie für die Aufrechterhaltung der endothermen Reformierungsreaktion wird durch die partielle Oxidation von zumindest einem Teil des kohlenwasserstoffhaltigen Einsatzes erzeugt. Um die Wärmeverluste des Reformers decken zu können, wird die Menge an Oxidationsmittel so eingestellt, dass der Gesamtprozess (Aufheizung von kohlenwasserstoffhaltigem Einsatz und Oxidationsmittel, Oxidation, Reformierung und Wassergas-Shift-Reaktion) leicht exotherm ist. Ist Stickstoff im Synthesegasprodukt erlaubt bzw. erwünscht, wie es der Fall ist, wenn das Synthesegas als Ausgangsstoff für die Ammoniakproduktion dient, wird als Oxidationsmittel Luft oder mit Sauerstoff angereicherte Luft eingesetzt. Wenn dagegen kein Stickstoff im Synthesegasprodukt vorhanden sein darf, wird technisch reiner Sauerstoff verwendet.

Verglichen mit der Dampfreformierung in von außen beheizten Reformerrohren kann bei der Autothermreformierung mit einem weit geringeren D/C-Verhältnis von etwa 0,3-0,6 gearbeitet werden, womit ein Wasserstoff/Kohlenmonoxid-Verhältnis (H₂/CO-Verhältnis) im Synthesegasprodükt von 2,15 erreichbar ist. Ein solches Synthesegas eignet sich sehr gut für die Weiterverarbeitung in einer nachgeschalteten Anlage zur Erzeugung von synthetischen Kraftstoffen, da das H₂/CO-Verhältnis dem dort geforderten Idealwert sehr nahe kommt.

Gewöhnlich besteht ein ATR-Reaktor aus einem mit einer feuerfesten Isolierung ausgekleideten Reaktorgefäß, das in seinem weitgehend zylindrisch geformten unteren Bereich ein Bett aus einem geeigneten Katalysatormaterial enthält, die als Schüttschicht eingebracht wird. Oberhalb des Katalysatorbetts befindet sich eine nach oben konisch sich verjüngende Brennkammer, an deren höchstem Punkt ein Brenner angeordnet ist, der von oben nach unten feuert.

Um eine möglichst effektive Umsetzung der Kohlenwasserstoffe bei geringe Belastung des Katalysatormaterials zu erreichen, werden in der Brennkammer Strömungsverhältnisse angestrebt, durch die der im Brenner erzeugte Gasstrom an jeder Stelle mit gleicher Stromdichte und Temperatur in das Katalysatorbett eintritt. In der Praxis ist ein solcher Idealzustand nur angenähert zu verwirklichen, weshalb der zentrale Bereich des Katalysatorbetts, der der Brennerflamme am nächsten ist, einer größeren thermischen Belastung ausgesetzt ist, als die weiter entfernten Randbereiche. In der Anfahrphase wird ein ATR-Reaktor häufig bei einem kleineren Druck als dem Betriebsdruck betrieben. Aufgrund der langen Brennerflamme, die sich unter diesen Bedingungen ausbildet, erfährt das Katalysatorbett in einer solchen Betriebsphase eine besonders starke und ungleichmäßige thermische Belastung.

Im Katalysatorbett werden nur relativ geringe Gasgeschwindigkeiten von 1-1,5m/s empfohlen, sodass eine Erhöhung der Kapazität eines ATR-Reaktors nur in geringem Maß durch eine bloße Steigerung des Einsatzvolumenstromes möglich ist. Vielmehr ist es notwendig, die Anströmfläche des Katalysatorbettes - und damit auch den Austrittsdurchmesser der konischen Brennkammer - in erster Näherung mit der Quadratwurzel der Kapazität zu vergrößern. Nach dem aktuellen Stand der Technik ist die Kapazität eines ATR-Reaktors auf ca. 600000m_{N}³/h Synthesegas beschränkt.

Treten Probleme mit dem Katalysatorbett auf (z. B. eine zu hohe Beladung mit Ruß) oder muss der Katalysator aufgrund seiner Alterung ausgetauscht werden, ist es notwendig, einen ATR-Reaktor abzuschalten und abzukühlen. Die Synthesegasproduktion muss unterbrochen werden und kann erst dann wieder fortgesetzt werden, wenn die Probleme beseitigt und der ATR-Reaktor wieder angefahren ist.

Untersuchungen zur Rußbildung und Reaktionskinetik in der Gasphase und am Katalysator haben gezeigt, dass der Volumenbedarf für Partielle Oxidation sehr viel kleiner als für die Dampfreformierung ist, da die Partielle Oxidation um einige Größenordnungen schneller abläuft, als die Reformierungsreaktion. Es ist daher nicht möglich, den Reaktionsraum gemäß dem konventionellen ATR-Reaktor Design so zu gestalten, dass gleichzeitig für beide Reaktionen optimale Bedingungen erreicht werden.

Aufgabe der vorliegenden Erfindung ist es, ein Verfahren der eingangs genannten Art sowie eine Vorrichtung zur Durchführung des Verfahrens anzugeben, durch die es möglich ist, die beschriebenen Nachteile des Standes der Technik zu überwinden.

Diese Aufgabe wird verfahrenseitig dadurch gelöst, dass die Reformierung durch einen Katalysator unterstützt wird, der auf einer Trägerstruktur in Form einer strukturierten Packung und/oder eines Monolithen angebracht ist.

Derartige Katalysatoren sind seit langem bekannt und werden beispielesweise in der Patentschrift EP1944269 als geeignet für den Einsatz in den Rohren eines Rohrreformer beschrieben. Gegenüber einer Schüttschicht aus Katalysatormaterial weisen Monolithe einen wesentlich geringeren Strömungswiderstand auf, so dass ihre Anströmfläche bei gleicher Umsatzleistung deutlich verringert werden kann. Neben einer Verringerung des Bauvolumens des Reaktors ermöglicht die Erfindung somit, die Strömungsverhältnisse im Reaktionsraum zu verbessern, da seine konische Erweiterung geringer als im Stand der Technik ausfallen kann. Im günstigsten Fall kann auf die konische Erweiterung ganz verzichtet und der Reaktor als Rohrreaktor ausgeführt werden.

Um das Bauvolumen eines als Rohrreaktor ausgeführten ART-Reaktors weiter verringern zu können, wird vorgeschlagen, dass sowohl das Brenngas als auch das Oxidationsmittel in jeweils mehr als drei Gasstrahlen in den Reaktionsraum eingeleitet werden, wobei der Abstand zwischen einem Brenngas- und einem zu diesem nächst benachbarten Oxidationsmittelstrahl beim Eintritt in den Reaktionsraum zwischen 2 und 500mm, bevorzugt zwischen 5 und 50mm liegt.

Ein derartiges Verfahren zur Einleitung von Brenngas und Oxidationsmittel in den Reaktionsraum ist in der beim Deutschen Patent- und Markenamt unter dem Aktenzeichen 102014017118.3 geführten Patentanmeldung beschrieben, deren Offenbarung mit der Zitierung vollständig in die vorliegende Anmeldung aufgenommen wird. Das Verfahren ermöglicht insbesondere die partielle Oxidation der im Brenngas enthaltenen Kohlenwasserstoffe mit einer kurzen und über den Querschnitt des Reaktionsraums weitgehend homogen verteilten Flamme auszuführen, so dass der Reaktionsraum kurz ausgeführt werden kann, ohne dass die Funktionsfähigkeit des Katalysator beeinträchtigt wird.

Weiterhin betrifft die Erfindung eine Vorrichtung zur Erzeugung von Synthesegas mit einem Reaktionsraum, einem sich an den Reaktionsraum anschließenden Katalysatorraum, mit einem darin angeordneten Katalysator, sowie einem Brenner, über den ein Brenngas sowie ein Oxidationsmittel in den Reaktionsraum eingeleitet werden können.

Die gestellte Aufgabe wird vorrichtungsseitig dadurch gelöst, dass der Katalysatorraum einen Katalysator enthält, der auf einer Trägerstruktur in Form einer strukturierten Packung und/oder eines Monolithen angebracht ist.

Eine bevorzugte Ausführung der erfindungsgemäßen Vorrichtung sieht vor, dass der Reaktor als Rohrreaktor ausgeführt ist, der eine Einrichtung zur getrennten Einleitung von Einsatzgasen in den Reaktionsraum, die reaktionsraumseitig in Austrittsöffnungen endende Zuführungskanäle für ein Brenngas und ein Oxidationsmittel aufweist, wobei sowohl die Zuführungskanäle für das Brenngas als auch die für das Oxidationsmittel in zumindest drei Austrittsöffnungen enden und wobei der Abstand zwischen einer Austrittsöffnung für das Brenngas und einer zu dieser nächst benachbarten Austrittsöffnung für das Oxidationsmittel zwischen 2 und 500mm, bevorzugt zwischen 5 und 50 mm liegt und wobei die Austrittsenden der Zuführungskanäle von einem thermischen Isoliermaterial umgeben oder durch ein thermisches Isoliermaterial gebildet sind.

Eine derartige Einrichtung zur getrennten Einleitung von Einsatzgasen in den Reaktionsraum ist ebenfalls aus der beim Deutschen Patent- und Markenamt unter dem Aktenzeichen 102014017118.3 geführten Patentanmeldung. Insbesondere ermöglicht eine derartige Einrichtung die Ausbildung einer kurzen Flamme, so dass der Abstand zwischen der Einrichtung zur getrennten Einleitung von Einsatzgasen Reaktionsraum und dem Eintrittsquerschnitt der strukturierten Packung und/oder des Monolithen weniger als 2m betragen kann.

Die Längsachsen des Reaktionsraums und des Katalysatorraums verlaufen vorzugsweise parallel oder um 90° zueinander geneigt, wobei die Längsachse des Reaktionsraumes zweckmäßigerweise senkrecht ausgerichtet ist. Jede andere Ausrichtung soll jedoch nicht ausgeschlossen sein. Bei senkrechter Längsachse des Reaktionsraumes erfolgt die Gasführung von oben nach unten oder von unten nach oben.

Besonders bevorzugt ist der Katalysatorraum mit einer horizontal verlaufenden Längsachse ausgeführt, wodurch die strukturierte Packung bzw. der Monolith horizontal gelagert werden kann. Eine die Anströmfläche verringernde Abstützung muss in dieser Konfiguration nicht vorgesehen werden, so dass der gesamte Querschnitt der strukturierten Packung bzw. des Monolithen als Anströmfläche nutzbar ist. Weiterhin werden die i.Allg. dünnen Stege der strukturierten Packung bzw. des Monolithen weniger stark belastet.

Um einen optimalen Reaktionserfolg zu gewährleisten sieht eine weitere Variante der erfindungsgemäßen Vorrichtung vor, dass der Katalysatorraum verschiedene, in Reihe geschaltete Katalysatoren mit jeweils unterschiedlichen Eigenschaften enthält.

Um ein einfaches Austauschen des Katalysatormaterials zu gewährleisten, ist vorgesehen, dass der Katalysatorraum im Reaktor lösbar eingebunden ist.

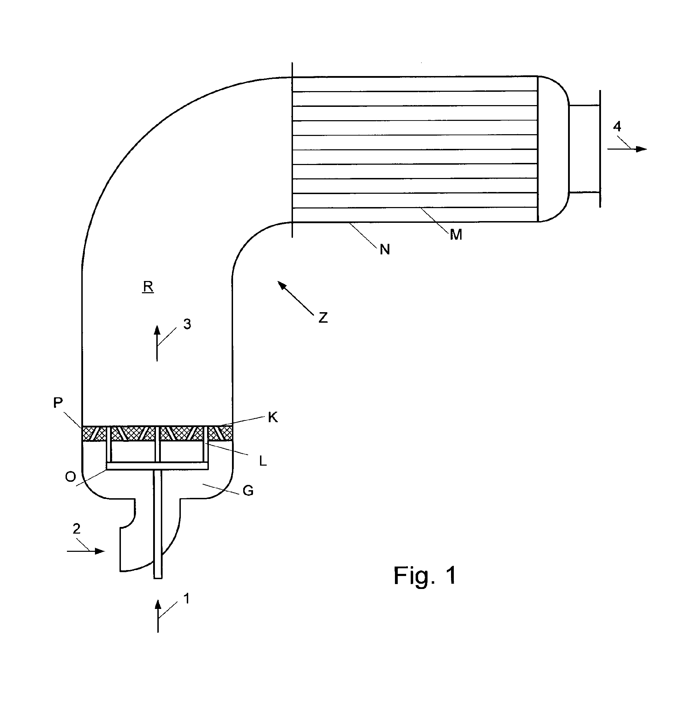

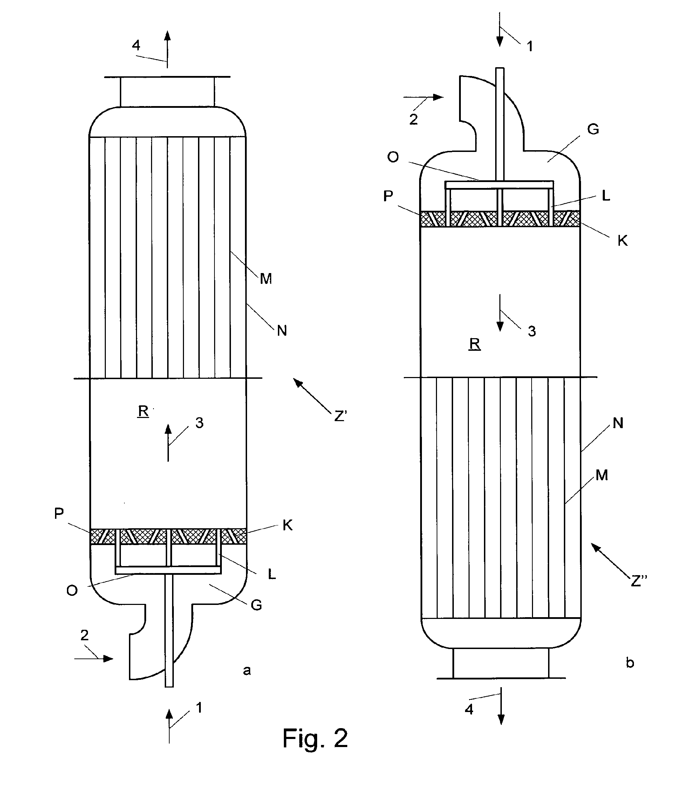

Im Folgenden soll die Erfindung anhand von Ausführungsbeispielen näher erläutert werden, die in den Figuren 1 und 2 schematisch dargestellt sind.

Die Figur 1 zeigt einen erfindungsgemäßen Rohrreaktor mit senkrechter Längsachse des Reaktionsraums und waagrechter Längsachse des Katalysatorraums.

Die Figur 2 zeigt zwei Beispiele für erfindungsgemäße Rohrreaktoren mit parallel verlaufenden Längsachsen von Reaktionsraum und Katalysatorraum.

Am unteren Ende des in Figur 1 im Längsschnitt dargestellten Reaktors Z ist ein erfindungsgemäßer Brenner angeordnet, über den ein Brenngas 2 alleine oder mit Dampf gemischt sowie ein Oxidationsmittel 1 in den Reaktionsraum R eingeleitet werden können. Der Brenner umfasst eine Platte P aus einem thermisch isolierenden Material, die den Querschnitt des Reaktionsraums R ausfüllt und diesen von dem Gasraum G abtrennt. Das Brenngas 2, bei dem es sich beispielsweise um Erdgas handelt, wird ggf. gemeinsam mit Dampf über den Gasraum G auf die Brenngaskanäle K verteilt, über die es in den Reaktionsraum R gelangt. Die gegenüber der Längsachse des Rohrreaktors geneigten Brenngaskanäle K werden entweder durch Aussparungen im thermisch isolierenden Material der Platte P direkt gebildet oder durch Rohre aus Metall oder Keramik, die von thermisch isolierendem Material umgeben sind. In der Darstellung sind jeweils zwei Brenngaskanäle K einem Oxidationsmittelkanal L zugeordnet, der parallel zur Längsachse des Rohrreaktors Z verläuft. Genauso wie für die Brenngaskanäle K gilt für die über die Verteilerleitung O verbundenen Oxidationsmittelkanäle L, dass sie entweder durch Aussparungen im thermisch isolierenden Material der Platte P direkt oder durch Rohre aus Metall oder Keramik gebildet werden, die von thermisch isolierendem Material umgeben sind. Durch die Neigung der Brenngaskanäle K gegenüber einem zugehörigen Oxidationsmittelkanal L wird die Ausbildung einer Wirbelströmung und damit einer kurzen Flamme bzw. Reaktionszone unterstützt, in der Wärme freigesetzt und Synthesegas 3 gebildet wird.

Das nach oben strömende Synthesegas 3, das noch immer nicht oder nicht vollständig umgesetzte Kohlenwasserstoffe enthält, wird um 90° umgelenkt und in den Katalysatorraum N geführt, in dem eine strukturierte Packung oder eine Trägerstruktur in Form eines Monolithen M angeordnet ist, auf der sich ein zur Unterstützung einer Reformierung geeigneter Katalysator befindet. Unter Nutzung der im Reaktionsraum freigesetzten Wärme sorgt der Katalysator für eine vollständige Umsetzung der im Synthesegas 3 enthaltenen Kohlenwasserstoffe, so dass ein weitgehend kohlenwasserstofffreies Synthesegas 4 erhalten wird.

Die Figur 2 zeigt in der Darstellung a einen Rohrreaktor Z', bei dem die Gasführung geradlinig von unten nach oben erfolgt, während die Darstellung b einen Rohrreaktor Z" zeigt, bei dem die Gase zwar ebenfalls geradlinig, allerdings von oben nach geführt werden.

## Patentansprüche

1. Verfahren zur Erzeugung von Synthesegas (4), wobei Kohlenwasserstoffe enthaltendes Brenngas (2) sowie ein Oxidationsmittel (1) in den Reaktionsraum (R) eines Reaktors (Z) eingeleitet werden, um durch Partielle Oxidation der im Brenngas (2) enthaltenen Kohlenwasserstoffe Wasserstoff und Kohlenmonoxid zu erzeugen und Energie freizusetzen, die bei einer nachfolgenden katalytisch unterstützten Reformierung verbraucht wird, **dadurch gekennzeichnet, dass** die Reformierung durch einen Katalysator unterstützt wird, der auf einer Trägerstruktur in Form einer strukturierten Packung und/oder eines Monolithen (M) angebracht ist.

2. Verfahren nach Anspruch 1, **dadurch gekennzeichnet, dass** der Reaktor (Z) als Rohreaktor ausgeführt wird und sowohl das Brenngas (2) als auch das Oxidationsmittel (1) in jeweils mehr als drei Gasstrahlen (K, L) in den Reaktionsraum (R) eingeleitet werden, wobei der Abstand zwischen einem Brenngas- und einem zu diesem nächst benachbarten Oxidationsmittelstrahl beim Eintritt in den Reaktionsraum (R) zwischen 2 und 500mm, bevorzugt zwischen 5 und 50mm liegt.

3. Vorrichtung zur Erzeugung von Synthesegas (4) mit einem Reaktionsraum (R), einem sich an den Reaktionsraum (R) anschließenden Katalysatorraum (N), mit einem darin angeordneten Katalysator, sowie einem Brenner, über den ein Brenngas (2) sowie ein Oxidationsmittel (1) in den Reaktionsraum (R) eingeleitet werden können, **dadurch gekennzeichnet, dass** der Katalysatorraum (N) einen Katalysator enthält, der auf einer Trägerstruktur in Form einer strukturierten Packung und/oder eines Monolithen (M) angebracht ist.

4. Vorrichtung nach Anspruch 3, **dadurch gekennzeichnet, dass** der Reaktor als Rohrreaktor ausgeführt ist, der eine Einrichtung zur getrennten Einleitung von Einsatzgasen in den Reaktionsraum (R), die reaktionsraumseitig in Austrittsöffnungen endende Zuführungskanäle (K, L) für ein Brenngas (2) und ein Oxidationsmittel (1) aufweist, wobei sowohl die Zuführungskanäle für das Brenngas (2) als auch die für das Oxidationsmittel (1) in zumindest drei Austrittsöffnungen enden und wobei der Abstand zwischen einer Austrittsöffnung für das Brenngas (2) und einer zu dieser nächst benachbarten Austrittsöffnung für das Oxidationsmittel (1) zwischen 2 und 500mm, bevorzugt zwischen 5 und 50mm liegt und wobei die Austrittsenden der Zuführungskanäle von einem thermischen Isoliermaterial (P) umgeben oder durch ein thermisches Isoliermaterial gebildet sind.

5. Vorrichtung nach Anspruch 4, **dadurch gekennzeichnet, dass** der Abstand zwischen der Einrichtung zur getrennten Einleitung von Einsatzgasen Reaktionsraum und dem Eintrittsquerschnitt der strukturierten Packung und/oder des Monolithen weniger als 2m beträgt.

6. Vorrichtung nach einem der Ansprüche 3 bis 5, **dadurch gekennzeichnet, dass** die Längsachsen des Reaktionsraums (R) und des Katalysatorraums (N) parallel oder um 90° zueinander geneigt verlaufen.

7. Vorrichtung nach einem der Ansprüche 3 bis 6, **dadurch gekennzeichnet, dass** die Längsachse des Katalysatorraums (N) horizontal verläuft.

8. Vorrichtung nach einem der Ansprüche 3 bis 7, **dadurch gekennzeichnet, dass** im Katalysatorraum (N) verschiedene Katalysatoren mit unterschiedlichen Eigenschaften in Reihe geschaltet sind.

9. Vorrichtung nach einem der Ansprüche 3 bis 9, **dadurch gekennzeichnet, dass** der Katalysatorraum (N) im Reaktor lösbar eingebunden ist.
